# EUROPEAN PATENT APPLICATION

(11) **EP 2 797 048 A1**
(43) Date of publication of application: **29.10.2014**
(21) Application number: 12858802.7
(22) Date of filing: 18.12.2012
(51) Int. Cl.: G06Q 40/02

(54) **METHOD OF ISSUING SERVICE TO SMART CARD OF USER EQUIPMENT AND SYSTEM FOR ISSUING SERVICE BY APPLYING SAME**

(30) Priority: 21.12.2011 KR 20110139110
(71) Applicant: SK C&C Co., Ltd., Seongnam-si, Gyeonggi-do 463-844 (KR)
(72) Inventor: YOU, Young Jin, Seoul 158-091 (KR)
(74) Representative: Walaski, Jan Filip
(86) International application number: PCT/KR2012/011081
(87) International publication number: WO 2013/094968

(57) **Abstract**

A method for provisioning a service to a smart card of a user mobile terminal and a system for provisioning a service by applying the same are provided. The method for provisioning the service includes: triggering an application installed in a user mobile terminal; connecting a channel with the triggered application; and provisioning a service to a smart card of the user mobile terminal via the application. Accordingly, a service provider can obtain a channel for installing its service in the smart card of the user mobile terminal.

## Description

### Technical Field

The present invention relates to a method for provisioning a service, and more particularly, to a method for provisioning a service which is provided by using a smart card of a user mobile terminal to the smart card.

### Background Art

As mobile communication terminals have become the most important channels for modem people in recent years, service providers such as banks, credit card companies, transportation card service providers, and others, want to expand their services to the mobile communication terminal with an emphasis on security.

A Near Field Communication (NFC)-based mobile commerce service, which enables users to use a credit card or a check card via their own mobile communication terminals is a typical example of such service.

A credit card company should install a credit card service in a smart card of a mobile communication terminal in order to provide a mobile credit card service to a specific user.

However, there is no way for the service provider, which wants to provide the service by using the smart card of the mobile communication terminal, such as a bank or a credit card company to access the smart card of the mobile communication terminal of a user.

### Disclosure

### Technical Problem

An aspect of the present invention is to solve at least the above-mentioned problems and/or disadvantages and to provide at least advantages described below. Accordingly, an aspect of the present invention is to provide a method for provisioning a service, which connects a data channel by triggering an application installed in a user mobile terminal and provisioning a service to a smart card of the user mobile terminal via the application, and a system for provisioning a service by applying the same.

### Technical Solution

According to an aspect of an exemplary embodiment, there is provided a method for provisioning a service, the method including: triggering an application installed in a user mobile terminal; connecting a channel with the triggered application; and provisioning a service to a smart card of the user mobile terminal via the application.

The triggering may include transmitting a push message to the application and triggering the application.

The push message may record an address of a system for provisioning the service, and the connecting the channel may include connecting by the application, a channel with the system by using the address.

The triggering may include, when a push queuing check request is received from the application, transmitting the push message to the application.

The method may further include: storing a smart card ID of the smart card of the user mobile terminal and a registration ID which is issued to the smart card; and authenticating the smart card by using the smart card ID and the registration ID, wherein the provisioning is performed when the smart card is authenticated.

The authenticating may include authenticating the smart card based on whether a smart card ID read out from the smart card by the application and a smart card ID received from a service provider are consistent with each other.

The smart card ID may include at least one of a smart card ID which is read out by the application when a channel with the smart card is connected, and a smart card ID which is acquired by transmitting a command to the application.

The authenticating may include authenticating the smart card based on whether a registration ID received from the application and a pre-stored registration ID are consistent with each other.

The smart card ID may be a Card Production Life Cycle (CPLC).

The registration ID may be an ID which is generated by a system which transmits the push message to the application and triggers the application.

The service may be a service which is requested to be provisioned by a service provider.

According to an aspect of another exemplary embodiment, there is provided a method for provisioning a service, the method including: triggering an application installed in a user mobile terminal; connecting by the application, a channel with a service provisioning system; and installing by the application, a service provisioned by the service provisioning system in a smart card of the user mobile terminal.

### Advantageous Effects

As described above, according to an exemplary embodiment, the application installed in the user mobile terminal is triggered and the channel is connected, and then the service is provisioned to the smart card of the user mobile terminal via the application.

Accordingly, various service providers such as banks and credit card companies can obtain a channel for installing their various services in the smart card of the user mobile terminal, and thus can contribute to the promotion of the mobile service combining the mobility of the mobile terminal and the security of the smart card.

In addition, the present invention can be applied regardless of a platform of the user mobile terminal and can trigger the application easily and with certainty via the push message.

### Description of Drawings

FIG. 1 is a view illustrating a service provisioning system to which the present invention is applicable;
FIG. 2 is a view to illustrate a process for registering a smart card of a user mobile terminal at a push system and a service provisioning system;
FIG. 3 is a view to illustrate a process in which a proxy application installed in a user mobile terminal is triggered by a push system;
FIG. 4 is a view to illustrate a process for connecting a channel for a communication between a service provisioning system and a smart card of a user mobile terminal;
FIG. 5 is a view to illustrating a process in which a service provisioning system authenticates a smart card of a user mobile terminal;
FIG. 6 is a detailed block diagram of the service provisioning system shown in FIG. 1;
FIG. 7 is a detailed block diagram of the service push system shown in FIG. 1; and
FIG. 8 is a detailed block diagram of the user mobile terminal shown in FIG. 1.

### Best Mode

Reference will now be made in detail to the embodiment of the present general inventive concept, examples of which are illustrated in the accompanying drawings, wherein like reference numerals refer to the like elements throughout. The embodiment is described below in order to explain the present general inventive concept by referring to the drawings.

### 1. Service Provisioning System

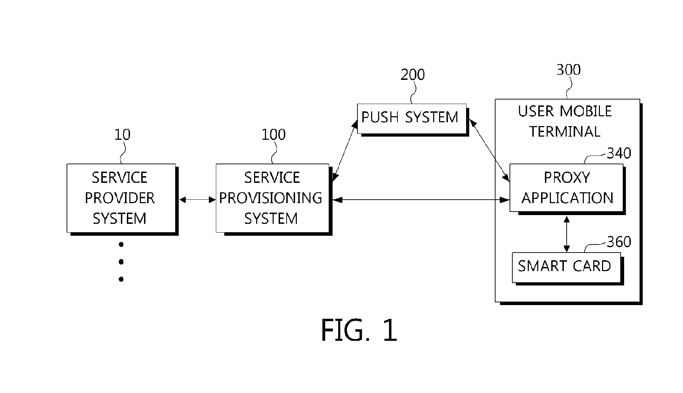

FIG. 1 is a view illustrating a service provisioning system to which the present invention is applicable. The service provisioning system shown in FIG. 1 is a system for provisioning a service which is provided via a user mobile terminal 300 by using a smart card 360 of the user mobile terminal 300.

The service recited herein may refer to a mobile credit card service, a mobile transportation card service, a mobile prepaid card service, an ID card service, etc. However, this is merely an example and the technical idea of the present invention can be applied to provisioning of other services.

As shown in FIG. 1, the service provisioning system is established by connecting a service provider system 10, a service provisioning system 100, a push system 200, and a user mobile terminal 300 to one another via a wired/wireless network.

The service provider system 10 is a system of a service provider which plans/operates/manages the above-described service.

In order to receive the service provided by the service provider via the user mobile terminal 300, the user should have the service provisioned to the smart card 360 of the user mobile terminal 300. The term "provisioning a service" refers to a process of installing a service applet and credentials necessary for receiving a service via the user mobile terminal 300 in the smart card 360.

The service provisioning system 100 provisions the service to the smart card 360 of the user mobile terminal 300 on behalf of the service provider system 10.

The service provider system 10 may be provided in plural number and the plurality of systems may have different service providers. Accordingly, the service provisioning system 100 may provision services to the smart card 360 of the user mobile terminal 300 on behalf of the service provider systems connected thereto.

The push system 200 is a system which triggers a proxy application 340 of the user mobile terminal 300 as a pre-process for provisioning the service.

The triggered proxy application 340 connects a channel with the smart card 360 and also connects a channel with the service provisioning system 100. Accordingly, a channel is established between the service provisioning system 100 and the smart card 360, so that the service provisioning system 100 can provision the service to the smart card 360.

### 2. Smart Card Registration

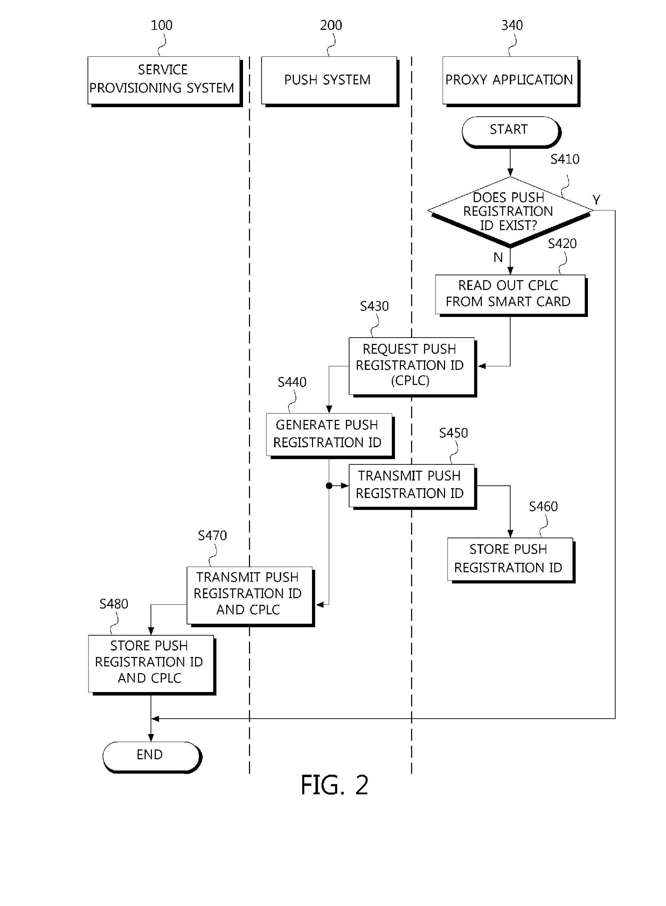

A process for registering the smart card 360 of the user mobile terminal 300 at the push system 200 and the service provisioning system 100 will be explained in detail with reference to FIG. 2. The registering process is a pre-process for provisioning the service to the smart card 360 of the user mobile terminal 300.

As shown in FIG. 2, when the proxy application 340 is executed first since it was installed in the user mobile terminal 300 and there is no push registration ID (S410-N), the proxy application 340 reads out a Card Production Life Cycle (CPLC) from the smart card 360 (S420).

The CPLC is information that is generated at the time of producing the smart card and is stored in the smart card, and is unique in the world. Accordingly, the CPLC is one exemplary type of smart card ID for identifying the smart card 360.

In operation S420, the proxy application 340 may transmit a CPLC read command to the smart card 360 and may receive return of a CLPC from the smart card 360.

Thereafter, the proxy application 340 requests the push system 200 to issue a push registration ID while transmitting the CPLC read out in operation S420 to the push system 200 (S430).

The push system 200 generates the push registration ID in response to the request received in operation S430 (S440), and transmits the push registration ID to the proxy application 340 (S450). The proxy application 340 stores the push registration ID received in operation S450 (S460).

In addition, the push system 200 transmits the push registration ID generated in operation S440 and the CPLC received in operation S430 to the service provisioning system 100 (S470). The service provisioning system 100 stores the push registration ID and the CPLC received in operation S470 in its own DB (S480).

### 3. Triggering of Proxy Application

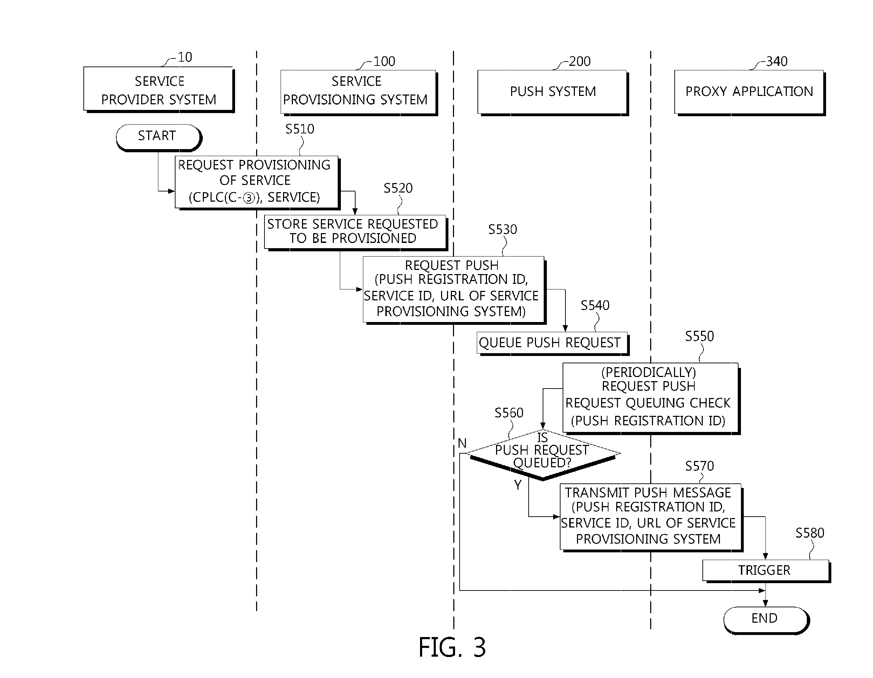

A process in which the proxy application 340 installed in the user mobile terminal 300 is triggered by the push system 200 will be explained in detail with reference to FIG. 3. The triggering process is a pre-process for provisioning the service to the smart card 360 of the user mobile terminal 300.

As shown in FIG. 3, when the service provider system 10 requests the service provisioning system 100 to provision the service to the smart card 360 (S510), the service provisioning system 100 stores the service which is requested to be provisioned (S520).

In operation S510, the service provider system 10 transmits a CPLC to specify the smart card 360 when requesting the provisioning of the service.

Thereafter, the service provisioning system 100 requests the push system 200 to push with respect to the smart card 360 (S530), and the push system 200 queues the push request received in operation S530 (S540).

The push request transmitted from the service provisioning system 100 to the push system 200 in operation S530 includes a push registration ID of the smart card 360, a service ID to specify the service to be provisioned, and a Uniform Resource Locator (URL) of the service provisioning system 100.

On the other hand, the proxy application 340 periodically accesses the push system 200 and requests the push system 200 to determine whether there is a queued push request or not, while transmitting the push registration ID (S550).

In response to the request in operation S550, the push system 200 determines whether the push request for the push registration ID of the smart card 360 is queued or not (S560).

When it is determined that the push request is queued in operation S560 (S560-Y), the push system 200 transmits a push message to the proxy application 340 (S570) and thus the proxy application 340 is triggered (S580).

The push message transmitted from the push system 200 to the proxy application 340 in operation S570 includes the push registration ID, the service ID, and the URL of the service provisioning system 100.

### 4. Channel Connection

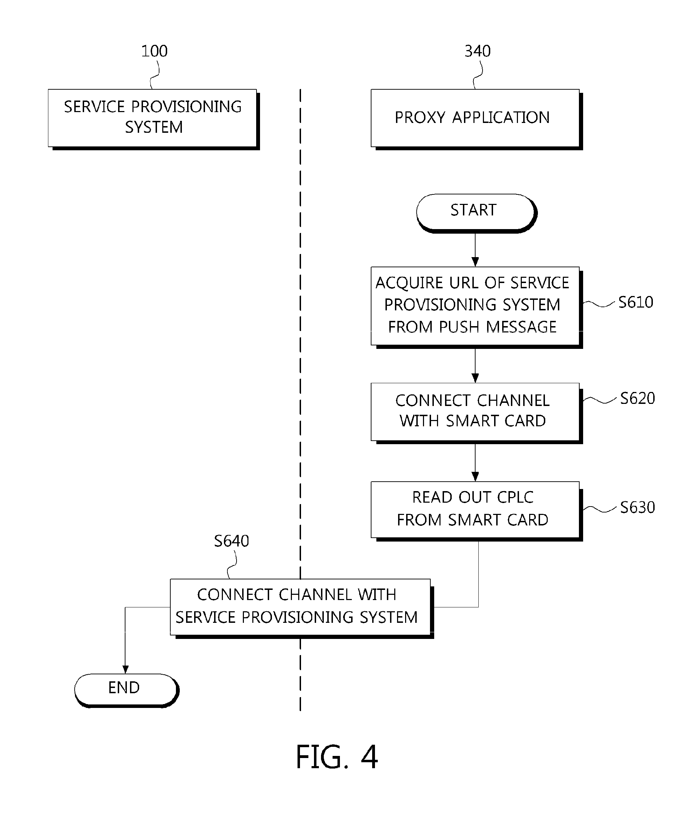

A process of connecting a channel for a communication between the service provisioning system 100 and the smart card 360 of the user mobile terminal 300 will be explained in detail with reference to FIG. 4. The channel connecting process is also a pre-process for provisioning the service to the smart card 360 of the user mobile terminal 300.

As shown in FIG. 4, the triggered proxy application 340 acquires the URL of the service provisioning system 100 from the push message received in operation S570 of FIG. 3.

Thereafter, the proxy application 340 connects a channel with the smart card 360 (S620). When the channel with the smart card 360 is connected, the proxy application 340 reads outs the CPLC from the smart card 360 (S630).

Thereafter, the proxy application 340 connects a channel with the service provisioning system 100 (S640). When the channel is connected in operation S640, the URL of the service provisioning system 100 acquired in operation S610 is referred to.

Since the channel between the proxy application 340 and the smart card 360 is connected in operation S620 and the channel between the proxy application 340 and the service provisioning system 100 is connected in operation S640, a channel between the service provisioning system 100 and the smart card 360 is connected via the proxy application 340.

### 5. Authentication of Smart Card

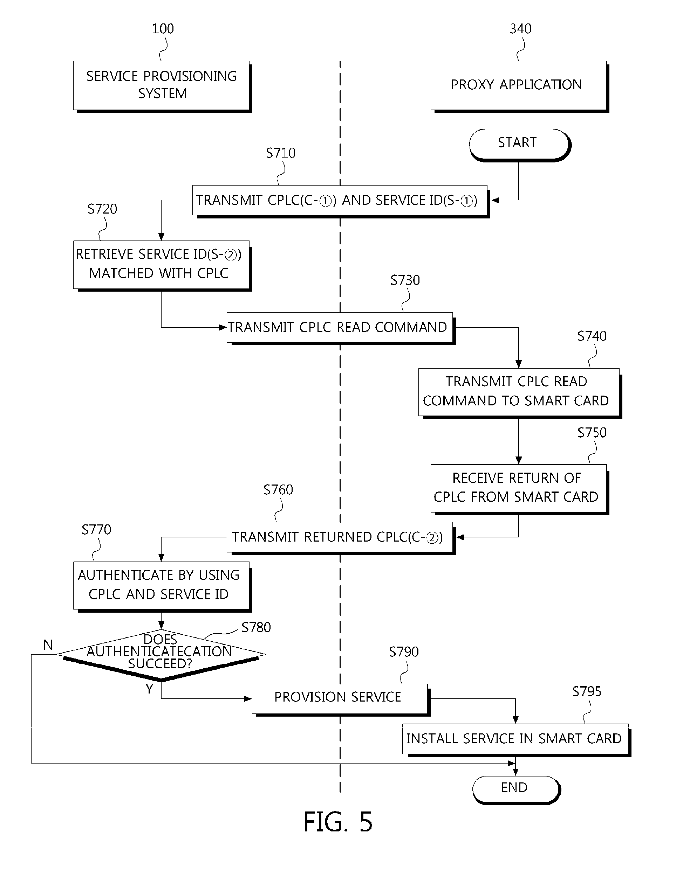

A process in which the service provisioning system 100 authenticates the smart card 360 will be explained in detail with reference to FIG. 5. The smart card authenticating process is also a pre-process for provisioning the service to the smart card 360 of the user mobile terminal 300.

As shown in FIG. 5, the proxy application 340 channel-connected with the service provisioning system 100 transmits the CPLC (C-①) of the smart card 360 read out in operation S630 of FIG. 4, and the service ID (S-①) acquired from the push message received in operation S570 of FIG. 3 to the service provisioning system 100 (S710).

Then, the service provisioning system 100 retrieves a service ID (S-②) matched with the CPLC (C-①) of the smart card 360 received in operation S710 from its own registration DB, and acquires the service ID (S720).

Thereafter, the service provisioning system 100 transmits a CPLC read command to the proxy application 340 (S730). The proxy application 340 transmits the CPLC read command received in operation S730 to the smart card 360 (S740), receives return of a CPLC (C-②) from the smart card 360 (S750), and transmits the CPLC (C-②) to the service provisioning system 100 (S760).

Thereafter, the service provisioning system 100 authenticates the smart card 360 by using the service ID and the CPLC (S770).

Specifically, in operation S770, the service provisioning system 100 determines whether the CPLC (C-①) acquired in operation S710, the CPLC (C-②) acquired in operation S760, and the CPLC (C-③) recorded on the provisioning request received from the service provider system 10 in operation S510 of FIG. 3 are all consistent with one another by comparing them, and determines whether the service ID (S-①) acquired in operation S710 and the service ID (S-②) acquired in operation S720 are consistent with each other by comparing them.

When the CPLC (C-①), the CPLC (C-②), and the CPLC (C-③) are all consistent with one another and the ID (S-①) and the ID (S-②) are consistent with each other, the service provisioning system 100 authenticates that the smart card 360 is valid.

When the authentication succeeds in operation S770 (S780-Y), the service provisioning system 100 provisions the service to the smart card 360 via the proxy application 340 (S790), and thus the service (service applet and credentials) is installed in the smart card 360 (S795).

### 6. Detailed Configuration of Service Provisioning System

### 6.1. Service Provisioning System

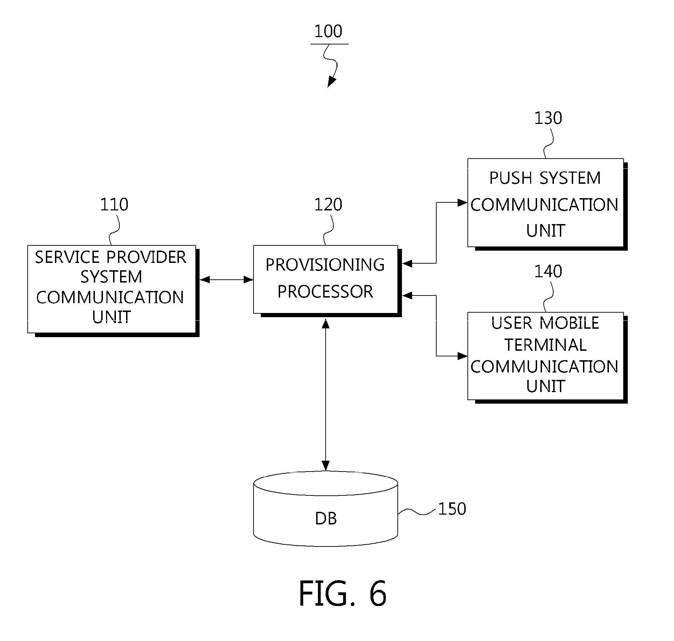

FIG. 6 is a detailed block diagram of the service provisioning system 100 shown in FIG. 1. As shown in FIG. 6, the service provisioning system 100 includes a service provider system communication unit 110, a provisioning processor 120, a push system communication unit 130, a user mobile terminal communication unit 140, and a DB 150.

The service provider system communication unit 110 is communicably connected with the service provider system 10, the push system communication unit 130 is communicably connected with the push system 200, and the user mobile terminal communication unit 140 is communicably connected with the user mobile terminal 300. The service provider system communication unit 110, the push system communication unit 130, and the user mobile terminal communication unit 140 may be integrated into a single communication unit.

The provisioning processor 120 performs the procedure performed by the service provisioning system 100 from among the procedure shown in FIGS. 2 to 5. That is, the provisioning processor 120 requests the push system 200 to transmit the push message to trigger the proxy application 340, authenticates the smart card 360 by communicating with the triggered proxy application 340, and then provisions the service requested by the service provider system 10.

The DB 150 stores the CPLC and the push registration ID as well as the history of the services requested to be provisioned.

### 6.2. Push System

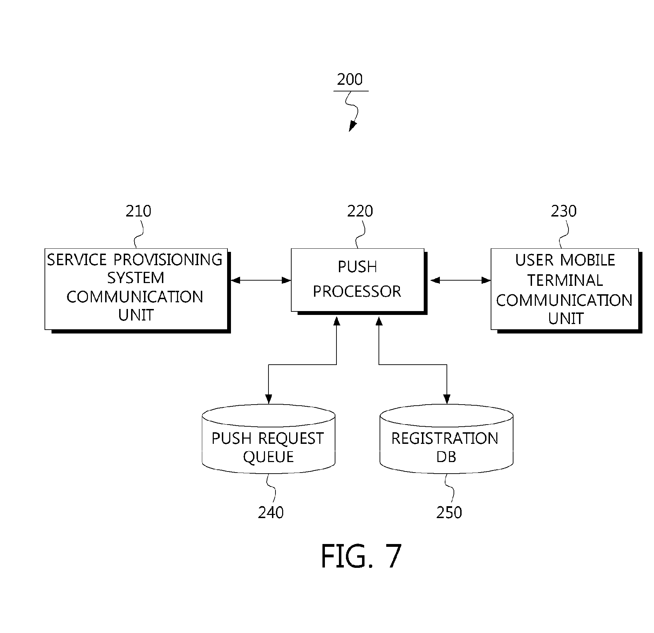

FIG. 7 is a detailed block diagram of the service push system 200 shown in FIG. 1. As shown in FIG. 7, the service push system 200 includes a service provisioning system communication unit 210, a push processor 220, a user mobile terminal communication unit 230, a push request queue 240, and a registration DB 250.

The service provisioning system communication unit 210 is communicably connected with the service provisioning system 100, and the user mobile terminal communication unit 230 is communicably connected with the user mobile terminal 300. The service provisioning system communication unit 210 and the user mobile terminal communication unit 230 may be integrated into a single communication unit.

The push processor 220 performs the procedure performed by the push system 200 from among the procedure shown in FIGS. 2 and 3. That is, the push processor 220 issues the push registration ID to the proxy application 340 of the user mobile terminal 300 and triggers the proxy application 340 when there is a push request of the service provisioning system 100.

In order to trigger the proxy application 340, the push processor 220 queues the push request of the service provisioning system 100 at the push request queue 240, and transmits the push message upon receiving periodic check requests of the proxy application 340.

The registration DB 250 stores the CPLC and the push registration ID.

### 6.3. User Mobile Terminal

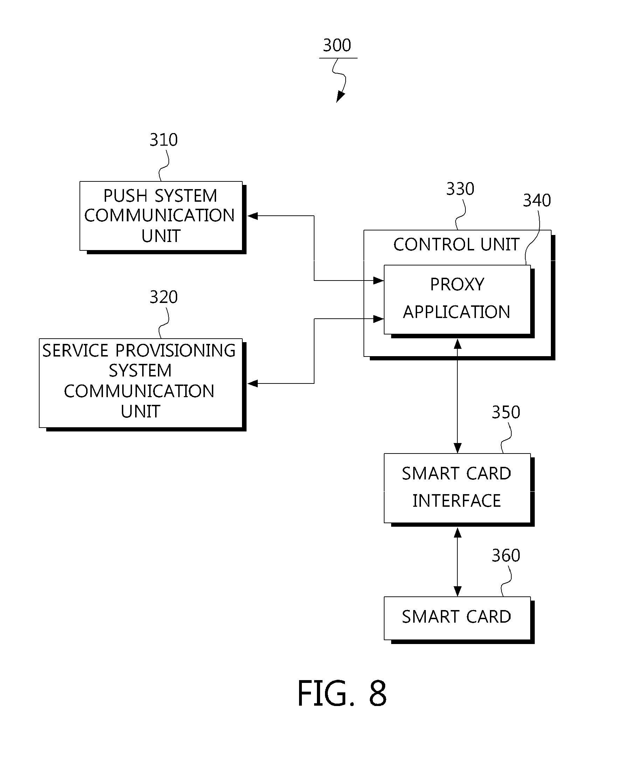

FIG. 8 is a detailed block diagram of the user mobile terminal 300 shown in FIG. 1. As shown in FIG. 8, the user mobile terminal 300 includes a push system communication unit 310, a service provisioning system communication unit 320, a control unit 330, the proxy application 340, a smart card interface 350, and the smart card 360.

The push system communication unit 310 is communicably connected with the push system 200, and the service provisioning system communication unit 320 is communicably connected with the service provisioning system 100. The push system communication unit 310 and the service provisioning system communication unit 320 may be integrated into a single communication unit.

The proxy application 340 is executed by the control unit 330 and performs the procedure performed by the proxy application 340 from among the procedure shown in FIGS. 2 to 5.

That is, the proxy application 340 transmits the CPLC of the smart card 360 to the push system 200 to issue the push registration ID, and periodically checks the push system 200 and is triggered when receiving the push message.

The triggered proxy application 340 connects a communication channel with the smart card 360 through the smart card interface 350, and connects a communication channel with the service provisioning system 100 through the service provisioning system communication unit 320.

Thereafter, the proxy application 340 installs the service provisioned by the service provisioning system 100 in the smart card 360.

The smart card 360 is the safest storage which cannot be hacked, and may be implemented by using a Universal Subscriber Identity Module (USIM), an Embedded Secure Element (SE), a Secure Memory Card, or other types of SE.

### 7. Variations

Up to now, the method and system for provisioning the service to the smart card 360 of the user mobile terminal 300 according to various exemplary embodiments have been described.

In the above-described exemplary embodiments, the CPLC for identifying the smart card 360 may be substituted with other types of smart card IDs, and the push registration ID may be substituted with other types of IDs.

The smart card authenticating method suggested in "section 5." is merely an exemplary embodiment and may be substituted with other authenticating methods.

In addition, in the above-described exemplary embodiments, the proxy application 340 periodically accesses the push system 200 and determines whether there is a push request queued for the smart card 360. However, this is merely an example and another exemplary embodiment may be implemented. For example, the push system 200 may transmit the push message to the proxy application 340 promptly when there is a push request of the service provisioning system 100.

In addition, the function of the push system 200 may be included in the service provisioning system 100 and the push system 200 may be omitted.

The technical idea of the present invention can be applied to a computer-readable recording medium which records a computer program for performing the functions of the apparatus and method according to the exemplary embodiments. In addition, the technical idea of the various exemplary embodiments may be implemented in the form of a computer-readable code that is recorded on a computer-readable recording medium. Any data storage device that can be read by a computer and can store data may be used as the computer-readable recording medium. For example, the computer-readable recording medium may be a Read Only Memory (ROM), a Random Access Memory (RAM), a CD-ROM, a magnetic tape, a floppy disk, an optical disk, a hard disk drive, etc. In addition, the computer-readable code or program stored in the computer-readable recording medium may be transmitted through a network connected among computers.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for provisioning a service, the method comprising:
triggering an application installed in a user mobile terminal;
connecting a channel with the triggered application; and
provisioning a service to a smart card of the user mobile terminal via the application.

2. The method of claim 1, wherein the triggering comprises transmitting a push message to the application and triggering the application.

3. The method of claim 2, wherein the push message records an address of a system for provisioning the service, and
wherein the connecting the channel comprises connecting by the application, a channel with the system by using the address.

4. The method of claim 2, wherein the triggering comprises, when a push queuing check request is received from the application, transmitting the push message to the application.

5. The method of claim 1, further comprising:
storing a smart card ID of the smart card of the user mobile terminal and a registration ID which is issued to the smart card; and
authenticating the smart card by using the smart card ID and the registration ID,
wherein the provisioning is performed when the smart card is authenticated.

6. The method of claim 5, wherein the authenticating comprises authenticating the smart card based on whether a smart card ID read out from the smart card by the application and a smart card ID received from a service provider are consistent with each other.

7. The method of claim 6, wherein the smart card ID comprises at least one of a smart card ID which is read out by the application when a channel with the smart card is connected, and a smart card ID which is acquired by transmitting a command to the application.

8. The method of claim 5, wherein the authenticating comprises authenticating the smart card based on whether a registration ID received from the application and a pre-stored registration ID are consistent with each other.

9. The method of claim 5, wherein the smart card ID is a Card Production Life Cycle (CPLC).

10. The method of claim 5, wherein the registration ID is an ID which is generated by a system which transmits the push message to the application and triggers the application.

11. The method of claim 1, wherein the service is a service which is requested to be provisioned by a service provider.

12. A method for provisioning a service, the method comprising:
triggering an application installed in a user mobile terminal;
connecting by the application, a channel with a service provisioning system; and
installing by the application, a service provisioned by the service provisioning system in a smart card of the user mobile terminal.
